# EUROPEAN PATENT SPECIFICATION

(11) **EP 4 619 839 B1**
(45) Date of publication and mention of the grant of the patent: **09.09.2026**
(21) Application number: 23813458.9
(22) Date of filing: 16.11.2023
(51) Int. Cl.: G05B 19/418

(54) **SYSTEM AND METHOD FOR INDUSTRIAL MANUFACTURING USING MACHINE TOOLS AND WIRELESS MEASUREMENT PROBES**
SYSTEM UND VERFAHREN ZUR INDUSTRIELLEN HERSTELLUNG UNTER VERWENDUNG VON WERKZEUGMASCHINEN UND DRAHTLOSEN MESSSONDEN
SYSTÈME ET PROCÉDÉ DE FABRICATION INDUSTRIELLE UTILISANT DES MACHINES-OUTILS ET DES SONDES DE MESURE SANS FIL

(30) Priority: 18.11.2022 EP 22275146
(43) Date of publication of application: 24.09.2025
(73) Proprietor: Renishaw plc, Wotton-under-Edge, Gloucestershire GL12 8JR (GB)
(72) Inventor: STYLES, John Anthony, Wotton-under-Edge, Gloucestershire GL12 8JR (GB); GRAY, Michael Philip, Wotton-under-Edge, Gloucestershire GL12 8JR (GB)
(74) Representative: Dunn, Paul Edward
(86) International application number: PCT/GB2023/053006
(87) International publication number: WO 2024/105404

(56) References cited:
- WO-A1-2018/134585
- US-A1- 2021 329 584
- US-A1- 2022 170 733

## Description

The present invention relates to an industrial manufacturing system that uses a plurality of machine tools, equipped with one or more wireless measurement probes, to manufacture industrial objects. In particular, it relates to improvements in combining measurement data collected by measurement probes with the corresponding positional information of the machine tool controller of the machine tool on which they are mounted.

Computer Numerically Controlled (CNC) machine tools are widely used in manufacturing industries to cut parts. Such machine tools comprise a machine tool controller that provides precise positional control of multiple motorised machine tool drives based on position feedback from transducers, such as position encoders. This arrangement allows highly automated cutting procedures to be performed within minimal operator supervision. Large installations can have many hundreds or even thousands of such machine tools and it is now also commonplace for such machine tools to be fitted with a variety of measurement probes that allow different features of parts or tools to be measured for set-up or inspection purposes. Automated tool change apparatus may also be provided for automatically exchanging cutting tool and measurement probes.

Touch trigger probes, which are sometimes also termed digital probes, are one known type of measurement probe. A touch trigger probe having a protruding stylus may be mounted, for example by automated tool change apparatus, in the spindle of a machine tool instead of a cutting tool. In such an example, the touch trigger probe simply acts as a switch and deflection of its stylus (e.g., when the stylus tip is moved into contact with the surface of an object) causes a trigger signal to be issued. At the instant the trigger signal is issued, the machine tool controller measures the position of the touch trigger probe in the local machine coordinate system (x,y,z), thereby allowing (with suitable calibration) the position of a point on the surface of the object to be measured. A touch trigger probe can thus be repeatedly driven into, and out of, contact with the surface of a workpiece to take point-by-point position measurements of that workpiece.

The measurement probe systems used on machine tools typically include an interface that is attached to the machine tool and hardwired to the machine tool controller. A wireless communication link, for example an optical or radio link, is then provided between the interface and the measurement probe. Such a wireless link to the measurement probe is preferred as hardwired solutions can often be impractical, especially when the measurement probe is to be loaded into a spindle using automated tool change apparatus.

WO2004/057552 A1 describes a wireless touch trigger measurement probe system. The system comprises a touch trigger measurement probe that can be carried in the spindle of a machine tool and an associated probe interface that is secured to an immovable part of the machine tool. The probe interface includes a RF transceiver that can mounted within the enclosure of the machine tool to allows wireless communication with a measurement probe. The RF communications protocol is configured to ensure that the probe interface only communicates with a matched (i.e., previously paired) measurement probe to allow multiple systems to be co-located (e.g., on adjacent machine tools). If the touch trigger probe is "triggered" (e.g., if its stylus contacts an object), a trigger signal is passed to the probe interface over the wireless (radio) link and then output by the interface over a signal line to the SKIP input of the machine tool controller. The machine tool controller, on receipt of this SKIP signal, latches or records the current position of the touch trigger measurement probe in the machine coordinate system (e.g. in x,y,z co-ordinates) and also stops motion of the machine tool.

WO2018/134585 A1 describes another example of a wireless touch trigger measurement probe system. The touch trigger measurement probe again communicates with its paired probe interface via a RF link, but the probe interface outputs the trigger signal as a digital data packet. In one example, the probe interface is connected to the machine tool controller over an industrial ethernet network and outputs a trigger event message that is time-stamped relative to a clock that is common to both the probe interface and the machine tool controller. Scanning probes, which are sometimes termed analogue probes, are another known type of measurement probe for on-machine object measurement. Unlike a touch trigger measurement probe which generates asynchronous measurement data, a scanning probe provides a continuous stream of measurements of the position of a surface (e.g., by measuring an amount of stylus deflection).

WO2005/065884 A2 describes such a scanning probe that passes scanning data wirelessly to its paired probe interface that is installed on the machine tool. A common clock signal shared by the probe interface and the machine tool controller allows an external computer to combine the machine position data and corresponding probe data to provide object profile measurements.

A wireless network including user equipment that performs position determination in a time-sensitive networking (TSN) framework is described in US2021/0329584 A1 (by Qualcomm Inc).

Although the above-described probing systems have been installed on machine tools for several years, the present inventors have appreciated that the above-described measurement systems can have several disadvantages. For example, the need to mount a probe interface on each machine tool can include a requirement to drill through the casing of the machine tool to allow cabling to be installed that allows the various components of the probe interface to be hard-wired to the machine tool controller. This can prove problematic when fitting a measurement probe system after a machine tool has already been commissioned or if a user wants to replace or upgrade an existing measurement probe system. It is also common for cutting tools and other accessories to be freely swapped between different machine tools by operators. For a measurement probe, this requires an additional step of pairing the measurement probe with the probe interface of the machine tool onto which it has been placed. This pairing step can be time-consuming and requires the operator to be trained so they understand that such a pairing step is required. **In** some instances, such a pairing operation may not be performed properly or at all, resulting in serious damage to the machine tool as no control signal is provided to stop motion of the measurement probe when it is driven into contact with the surface of an object. Such machine tool crashes can result in expensive repairs and lengthy down times.

The invention is defined in the appended set of claims. According to a first aspect of the present invention, there is provided an industrial manufacturing system, comprising;
a plurality of machine tools, each of the plurality of machine tools including one or more motorised machine tool drives and a machine tool controller for controlling the position of the one or more motorised machine tool drives,
one or more measurement probes that are mountable on a machine tool to enable on-machine measurement of an object, each of the one or more measurement probes having a measurement sensor for collecting measurement data and a radio transceiver for transmitting the collected measurement data, and
an industrial communications network interfaced to the machine tool controller of each of the plurality of machine tools,
characterised in that the industrial communications network comprises;
a cellular radio network comprising a plurality of cellular base stations for wireless communication with the radio transceiver of each of the one or more measurement probes,
a cellular locating unit for calculating a cellular location of the radio transceiver of each of the one or more measurement probes, and
a measurement control unit configured to use the cellular location calculated for each of the one or more measurement probes to determine which machine tool of the plurality of machine tools each measurement probe is mounted on, the measurement control unit thereby enabling the measurement data from each measurement probe to be used with corresponding machine position data from the machine tool on which that measurement probe is mounted.

The present invention thus relates to an industrial manufacturing system that comprises an industrial communications network which enables measurement data to be passed between one or more measurement probes and a plurality of machine tools.

The term "machine tool" as used herein refers to an industrial machine, such as a lathe, machining centre, grinding machine, mill-turn machine etc, that is primarily used to remove or cut material from a workpiece. In addition to performing such a machining function, a machine tool can also be equipped with an accessory such as a measurement probe to allow the measurement of workpieces (e.g., for inspection or set-up purposes) or cutting tools (e.g., to measure tool length, diameter and wear). Each machine tool includes one or more motorised machine tool drives and a machine tool controller (also termed a computerised numerical controller or CNC) for controlling the position of the one or more motorised machine tool drives. Transducers, such as position encoders, may also be provided on the motorised machine tool axes to allow accurate positional control. Machine position data may also be derived from such transducers that describes the relative position of the part of the machine tool that holds the workpiece and the part of the machine tool holding the cutting tool or accessory. The machine tool controller may also be programmable to allow various cutting and inspection programs to be executed that define the desired motion of the cutting tool and/or measurement probe. Each of the plurality of machine tools of the system may be of similar type, or they may be of different types to perform a variety of machining operations.

The measurement probes that are provided as part of the industrial manufacturing system are mountable on a machine tool. In other words, each measurement probe is configured so that it can be mounted on a machine tool to enable on-machine (e.g., in-process) measurements of tools or workpieces. More particularly, each measurement probe can be mounted on at least one of the plurality of machine tools of the industrial manufacturing system. In a preferred embodiment, each measurement probe is mountable to the spindle of a machine tool to allow measurements of a workpiece to be acquired. For example, the measurement probe may include a shank that can be releasably held in a machine tool spindle. Alternatively, the measurement probe may be mounted to the machine tool bed or machine tool casing, or it may be mounted on a moveable arm within the machine tool. **In** such examples, the measurement probe may be a tool setting probe that is configured to measure a tool, such as a cutting tool held in the machine tool spindle. Each of the one or more measurement probes has a measurement sensor for collecting measurement data. The measurement sensor may be of any known type. For example, the measurement sensor may sense deflection of a protruding stylus or it may be an optical sensor for non-contact surface measurement. **In** other words, different types of measurement probe could be provided for a variety of different measurement tasks. **In** a preferred embodiment, each of the plurality of measurement probes is a spindle-mounted touch trigger measurement probe having a deflectable stylus.

The industrial manufacturing system also comprises an industrial communications network interfaced to the machine tool controller of each of the plurality of machine tools. For example, the industrial communications network may include an industrial ethernet network. Each of the machine tool controllers (i.e., the machine tool controller of each of the plurality of machine tools) may be interfaced (hard-wired) to the industrial ethernet network via a network cable. The industrial communications network includes a cellular radio network which allows wireless communication with the radio transceivers of each measurement probe. **In** particular, the cellular radio network comprises a plurality of cellular base stations for wireless communication with the radio transceiver of each of the one or more measurement probes. **In** a preferred embodiment, the cellular radio network is an industrial 5G cellular network. **In** this manner, the measurement data that is collected by each measurement probe can be passed over the industrial communications network. It should be noted that the various base stations and antennas of the cellular radio network need not be located on or adjacent any of the machine tools, but appropriately distributed around the industrial environment to provide cellular coverage of the desired working space. Various other radio-enabled devices may also use the cellular radio network.

The industrial communications network, e.g., the cellular network, also comprises a cellular locating unit for calculating a cellular location of the radio transceiver of each of the one or more measurement probes. As explained below, such a cellular locating unit may be provided as an integral component of the 5G core of a cellular 5G network. For example, the cellular locating unit may be integrated and distributed within the industrial communications network and/or it may comprise a software unit provided within the software architecture of the network. A measurement control unit is also provided that uses the cellular location that has been calculated for each of the one or more measurement probes (i.e., by the cellular locating unit) to determine which machine tool of the plurality of machine tools each measurement probe is mounted on. The measurement control unit can then ensure that the measurement data from each measurement probe is used with corresponding machine position data from the machine tool on which that measurement probe is mounted. **In** other words, machine position data from a machine tool can be paired or matched with measurement data from a measurement probe mounted on that machine tool.

The present invention thus allows measurement probes to be used on a machine tool without requiring a dedicated probe interface and receiver to be installed on that machine tool as per the prior art systems described above. Instead, measurement data is passed from the measurement probe to the relevant machine tool controller over the industrial communications network that might have already been installed in a factory for various other purposes. Furthermore, the present invention removes the need to perform any kind of manual pairing procedure between a measurement probe and probe interface. **In** particular, the measurement control unit can automatically pair each measurement probe with the machine tool that it is mounted on. This allows machine tool operators to simply swap measurement probes between machine tools in a factory without having to then perform a manual pairing process with the new probe interface. This added flexibility allows a more efficient use of measurement probes within a factory and also speeds up the process of replacing a malfunctioning or non-operational measurement probe (e.g., by removing the need to call a maintenance engineer trained to perform the probe pairing procedure) thereby reducing machine tool downtime. The possibility of a measurement probe mistakenly being paired with the probe interface of an incorrect machine tool, which raises the risk of serious damage or injury due to a machine crash, is also removed.

The measurement control unit may use the cellular location information to establish which machine tool the probe is mounted on in a number of different ways. For example, each machine tool may include a radio transceiver that can communicate with the cellular radio network such that its position can also be established by the cellular locating unit. Alternatively, each machine tool may include an alternative device for measuring its location (e.g., a GPS tracker, a radio transceiver on different cellular radio network etc) and be configured to report its measured location to the measurement control unit via its machine tool controller. The measurement probe may then be assumed to be mounted on the machine tool that has a location closest to its own cellular location.

Advantageously, the measurement control unit stores a machine tool location table defining a plurality of non-overlapping zones in which each of the plurality of machine tools are located. The measurement control unit may then determine which machine tool each measurement probe is mounted on by identifying which one of the plurality zones contains the cellular location of that measurement probe. The various zones may be defined during machine tool installation and updated in the relatively rare event that a machine tool is moved. For example, a mobile device on the cellular network (e.g., one of the measurement probes) may be placed at points around the machine tool and cellular location collected that allows such a zone to be defined. Alternatively, a measurement probe may be mounted on each machine tool, a cellular location of the measurement probe measured and a zone defined that extends around (e.g., surrounds) that cellular location. It would also be possible for a user to manually input machine tool location data defining the plurality of zones. For typical machine tools, a zone may be a few cubic metres with the cellular location of the measurement probes needing to be measured to within tens of centimetres.

**In** a preferred embodiment, the industrial manufacturing system comprises a plurality of measurement probes. **In** other words, the one or more measurement probes comprise a plurality of measurement probes that each have a measurement sensor for collecting measurement data and a radio transceiver for transmitting the collected measurement data. Each of the plurality of measurement probes can communicate via the cellular radio network and a cellular location can be calculated by the cellular locating unit for each measurement probe. The measurement control unit is also configured to use the cellular location calculated for each of the measurement probes to determine which machine tool each of the plurality of machine tools each measurement probes are mounted on. The measurement control unit can then enable the measurement data from each measurement probe to be used with the corresponding position of the one or more motorised machine tool drives of the machine tool on which that measurement probe is mounted. **In** this way, the measurement probes can be shared amongst the machine tools as required allowing measurement probes to be freely replaced and exchanged between machine tools. A local stock of spare measurement probes could also be kept as replacements for damaged or malfunctioning measurement probes.

The plurality of measurement probes may include only measurement probes of the same type. For example, the system may include a plurality of touch trigger measurement probes. Alternatively, the plurality of measurement probes may include measurement probes of different types. A single measurement probe may be mounted on one machine tool. Alternatively, more than one measurement probe may be mounted on one machine tool. For example, a spindle mounted measurement probe (for workpiece measurement) and a table mounted measurement probe (for tool measurement) may both be mounted on the same machine tool and measurement data from each of the measurement probes may be used with corresponding machine position data from the machine tool. The measurement data may include an indication of which measurement probe, or which type of measurement probe, it was generated by to enable the appropriate measurement data to be used for the required measurement tasks.

Advantageously, each of the measurement probes may be operable in at least a standby mode and a measurement (active) mode. The radio transceiver of the measurement probe may be used in standby mode to enable communications with the cellular radio network (e.g., to allow its location to be determined by the cellular locating unit). Standby mode operation may comprise the radio transceiver being placed in a low power or power-saving mode (e.g., to increase battery life). The measurement probe may be activated for measurement only when placed in the measurement mode. For example, switching to measurement mode may comprise powering the measurement sensor and operating the radio transceiver in a full or standard communications mode that allows the transmission of collected measurement data. Operation in other modes would also be possible.

Each measurement probe may conveniently have a unique serial number. Each measurement probe, in particular each radio transceiver, may be allocated a unique identity code to allow it to be uniquely identified on the cellular radio network. For example, each measurement probe many be allocated an International Mobile Equipment Identity (IMEI) code. An IMEI code is a unique 15-digit code that precisely identifies the device. The IMEI code may be stored in a Subscriber Identity Module (SIM) card that is inserted into the measurement probe to allow it to access the cellular network. Alternatively, the measurement probe may include an embedded-SIM (eSIM) to store the IMEI code. A unique serial number of the measurement probe may be linked with an IMEI code at the time of installation. The measurement control unit may store details of the probe serial number and/or unique identity (e.g., IMEI) code, along with information about certain characteristics of the associated measurement probe.

The above-described arrangement also allows specific configuration information (e.g., settings for acquiring measurements or for processing collected measurement data etc) to be sent to each measurement probe (e.g., because each probe can be uniquely identified). This could allow measurement probe configurations to be changed on the fly. The measurement control unit may thus send probe configuration settings to each measurement probe via the cellular network. In a preferred example, the probe configuration settings of each measurement probe could be set based on the machine tool on which the measurement probe was installed. In other words, the measurement control unit may be configured to send probe configuration settings to each measurement probe via the cellular radio network, the probe configuration settings being selected based on the machine tool on which the measurement probe is determined to be mounted. This would allow a measurement probe to be swapped between machine tools with its probe configuration settings updated to meet the requirements of the machine tool on which it was mounted. The requirement to manually update measurement probe configuration settings when using a measurement probe with a certain machine tool could thus be avoided. In a preferred embodiment, one of the machine tools initiates a measurement procedure by sending a measurement request to the measurement control unit over the industrial communications network. This measurement request may include details of the type of measurement probe that is required for the measurement (e.g., a spindle mounted measurement probe or a tool setter measurement probe etc). In response to the request, the measurement control unit determines which measurement probe or probes are mounted on the machine tool that has made the request. For example, the measurement control unit may refer to stored (previously acquired) information about measurement probe location or it may instruct the cellular locating unit to establish the present location of all or some of the measurement probes on the cellular radio network. The measurement control unit could then, using the probe location and probe type information, allocate a specific measurement probe for the required measurement task.

As explained above, the measurement probes may operate in a standby mode when not being actively used for measurement and hence the measurement control unit may send an activation ("wake-up") instruction via the cellular radio network to a required measurement probe to enter its measurement mode. Once the required measurement probe has entered its measurement mode, a message may be sent back over the cellular radio network to inform that measurement control unit that the desired measurement probe is now ready to perform a measurement. The measurement control unit may then communicate with the relevant machine tool (over the industrial communications network) to inform it that the required measurement probe is active (error dropped) and that the measurement cycle can begin. Measurement data from the measurement probe can then be associated with machine position data from the associated machine tool, as explained below. If radio communications can't be established with a measurement probe or if it is lost for some reason during use (e.g., due to the probe battery becoming exhausted, damage to the probe or high levels of RF interference), then the measurement control unit preferably communicates with the relevant machine tool (i.e., the machine tool that initially requested the probe to be activated) to raise an error. This error may be used by the machine tool to stop any machine movement and the error state may be communicated to an operator.

Instead of the required measurement probe being activated by communications over the cellular radio network, an external stimulus could be used to change the operational mode of a measurement probe (e.g., to switch the measurement probe from a standby mode into a measurement mode). For example, the measurement probe may include a shank-switch that is depressed when it is loaded into a spindle. Alternatively, a characteristic motion of the measurement probe as sensed by acceleration sensors (e.g., accelerometers) within the measurement probe may be used to activate the measurement probe. For example, rotation (spinning) of the measurement probe by the spindle may activate the probe (i.e., using a so-called "spin-on" process). It would also be possible for the motion that occurs when the measurement probe is loaded into the spindle by an automatic tool changer apparatus to be recognised and used to activate the measurement probe. The present Applicant's prior patent EP1613921 outlines various examples of such measurement probe activation techniques. Activation by an external stimulus is particularly useful when there are multiple probes of the same type mounted to one machine tool as it further ensures the required measurement probe has been activated for measurement.

Advantageously, the measurement control unit is configured to route measurement data received from each of the one or more measurement probes to the machine tool controller of the machine tool on which the measurement probe is mounted. For example, measurement data output by a measurement probe may be received by the measurement control unit and then passed to the relevant machine tool controller; this data transfer being via the industrial communications network. Once the measurement data is received by the machine tool controller, it may be appropriately processed by the machine tool controller to derive the desired object measurements. For example, the machine tool controller may combine machine position data that describes the various positions of the one or more motorised machine tool drives of the machine tool with the received measurement data to calculate the position of one or more points on the surface of an object.

Instead of the measurement calculations being performed by the machine tool controller, it would also be possible for such calculations (or part of such calculations) to be performed by the measurement control unit. Advantageously, the machine tool controller of each of the plurality of machine tools is configured to pass machine position data to the measurement control unit. As explained above, the machine position data describes the relative position of moveable parts of the machine tool. For example, it may describe the position and/or orientation of a spindle relative to a table or machining bed on which a workpiece is mounted. Conveniently, the machine position data may describe the position in a local coordinate system of the machine tool. For example, the machine position data may be provided as sets of Cartesian (x,y,z) co-ordinates. The machine position data may be output as a continual data stream to the measurement control unit. Alternatively, the machine position data may be sent periodically or on request.

The measurement control unit is conveniently configured to use the machine position data and the corresponding measurement data to provide a measurement of an object. In other words, the machine tool controller may output machine position data that is used with corresponding measurement data to calculate the position of one or more points on the surface of an object. The measurement control unit may include a memory or buffer to store received machine position information. The measurement control unit may include one or more processors to process the measurement data and machine position data. The measurement control unit may comprise a personal computer. The result of the calculations performed by the measurement control unit may then be passed back to the machine tool controller, for example to allow cutting parameters, cutting or inspection paths, work offsets etc to be appropriately adjusted. It should be noted that it would also be possible for the analysis of the measurement data and machine position data to be shared between the measurement control unit and the machine tool controller. Similarly, it would also be possible for both the machine tool controller and the measurement control unit to perform separate calculations using the measurement data and machine position data.

In a preferred embodiment, the measurement data includes time critical measurement data for halting motion of the motorised machine tool drives of the machine tool on which the measurement probe is mounted. For example, if the measurement probe is a touch trigger measurement probe having a deflectable stylus the measurement data may indicate that a trigger event (e.g., stylus contact with an object) has occurred. In such an example, the industrial communications network is configured to ensure a stop message reaches the machine tool controller within a sufficiently short period of time to allow motion to be stopped before the stylus is over-deflected by an amount that might cause damage to the measurement probe or machine tool. The measurement data may thus be passed to the machine tool controller within the required time. Alternatively, the measurement control unit may receive the measurement data and issue a stop instruction to the machine tool controller within the required time.

As noted above, for certain types of measurement probe it has to be ensured that the machine tool controller receives the measurement data or a stop instruction derived from the measurement data sufficiently quickly to stop continued motion of the machine tool within a certain time period. Advantageously, the industrial communications network is configured to operate as a time sensitive network (TSN) having a latency of less than 100ms. In other words, a stop instruction issued by the measurement probe as the measurement data should preferably always reach the machine tool controller within 100ms. More preferably, the industrial communications network is configured to have a latency of less than 50ms, or less than 10ms. It should be noted that these latency values may only apply to data that is designated as time-critical (e.g., the measurement data from a measurement probe) and that other messages (e.g., machine status updates, battery levels, measurement probe settings, cellular locations) may be passed over the network with a higher latency. This may mean that the measurement data transmitted by the wireless communications module of each measurement probe is prioritised over other (non-time critical) data carried via the industrial communications network. The industrial communications network may comprise a 5G network in compliance with the technical specifications defined in release 16 of the 3^{rd} Generation Partnership Project (3GPP) standards organization. Such a 5G network allows operation as a TSN. Particular reference is made to the 3GPP standard specification: 3GPP TR 21.916 V0.5.0 (2020-07).

The latency of the industrial communications network can affect the accuracy of object measurements. In particular, any variations in latency (jitter) can affect the ability to temporally align the measurement data with the machine position data. It is therefore preferred that the measurement data transmitted by the radio receiver of each measurement probe includes a time-stamp. Although the use of a time sensitive network is still necessary if motion of the machine tool needs to be stopped, time-stamping the measurement data means that the network latency does not affect metrology because the time-stamp can be used to temporally align the measurement data with the machine position data.

Preferably, each of the one or more measurement probes and the machine tool controller of each of the plurality of machine tools are synchronised to a common clock. For example, the industrial communications network may comprise a master clock and timing signals from the master clock may be passed to each measurement probe and each machine tool controller. The measurement control unit may also have access to the timings of the master clock. The measurement probes and machine tool controllers may also each include a local clock that is periodically synchronised to the master clock. Other configurations would be possible. In this manner, the time-stamps applied to the measurement data are timed using a time base that is also known to the measurement control unit and/or the relevant machine tool controller. This allows synchronisation of the measurement data and machine position data. The position of points on the surface of objects, such as cutting tools or workpieces, can thus be measured.

As described above, the one or more measurement probes may include measurement probes of any type. For example, the measurement probe may be a scanning or analogue probe. The measurement probe may be tool-setting measurement probe, a laser tool setter, an optical probe etc. The measurement probe may be a contact or non-contact measurement probe. The measurement probe may be battery operated. Advantageously, the one or more measurement probes comprise at least one touch trigger measurement probe. Each touch trigger measurement probe may have a measuring sensor comprising a touch trigger sensor for sensing deflection of a deflectable stylus, the (asynchronous) measurement data collected by each touch trigger measurement probe comprising a trigger event indicating the stylus has been deflected from a rest position

Advantageously, the cellular locating unit is configured to periodically calculate the cellular location of each of the one or more measurement probes. For example, the cellular location may be determined on a regular, periodical basis (e.g., every few minutes). Alternatively, the cellular location may be determined when the measurement probe is activated for measurement or senses it has been moved. In this manner, it can be ensured the cellular location is up-to-date whenever measurements are acquired.

According to a second aspect of the present invention, there is provided a measurement probe configured for use in the industrial manufacturing system according to the first aspect of the present invention. The machine tool measurement probe comprising a measurement sensor and a radio transceiver for communicating with a cellular radio network. The machine tool measurement probe may also comprise any of the features described above in connection with the first aspect of the present invention.

According to a third aspect of the present invention, there is provided a measurement control unit for use in the system according to the first aspect of the present invention. The measurement control unit being configured to form part of the industrial communications network and to use the cellular location calculated for each of the one or more measurement probes by the cellular locating unit to determine which machine tool of the plurality of machine tools each measurement probe is mounted on, the measurement control unit thereby enabling the measurement data from each measurement probe to be used with corresponding machine position data (e.g., data defining the positions of the one or more motorised machine tool drives) of the machine tool on which that measurement probe is mounted. The measurement control unit may also comprise any of the features described above in connection with the first aspect of the present invention.

According to a fourth aspect of the present invention, there is provided a kit for enabling the use of one or more measurement probes with a plurality of machine tool, the kit comprising a measurement control unit in accordance with the third aspect of the invention and one or more measurement probes in accordance with the second aspect of the invention.

According to a fifth aspect of the present invention, there is provided method of using one or more measurement probes with a plurality of machine tools, each of the one or more measurement probes having a measurement sensor for collecting measurement data and a radio transceiver for transmitting the collected measurement data, and each of the plurality of machine tools including one or more motorised machine tool drives and a machine tool controller for controlling the position of the one or more motorised machine tool drives, the method comprising the steps of; i) interfacing the machine tool controller of each of the plurality of machine tools to an industrial communications network that includes a cellular radio network comprising a plurality of base stations that allow wireless communication with the radio transceiver of each of the one or more measurement probes, ii) using the cellular radio network to calculate a cellular location of the radio transceiver of each of the one or more measurement probes, iii) using the cellular location calculated for each of the one or more measurement probes to determine which machine tool of the plurality of machine tools each measurement probe is mounted on, and iv) using the measurement data from each measurement probe with corresponding positions of the one or more motorised machine tool drives of the machine tool on which that measurement probe is mounted. The method may include any of the features or steps described for the first aspect of the invention.

Also described herein is an industrial manufacturing system, comprising a plurality of machine tools, each machine tool comprising a machine tool controller, one or more measurement probes for mounting to a machine tool and taking on-machine measurements, each measurement probe having a measurement sensor for collecting measurement data and a wireless communications module for transmitting the collected measurement data, and an industrial communications network interfaced to each machine tool controller, wherein the industrial communications network comprises one or more wireless receiver nodes for receiving the measurement data transmitted by the wireless communications module of each measurement probe, and a measurement control unit configured to allow the measurement data received by the wireless receiver nodes from any of the one or more measurement probes to be routed to any selected one of the plurality of machine tool controllers. The measurement control unit may include any of the features described for the first aspect of the invention.

Also described herein is an industrial manufacturing system. The system may comprise at least one machine tool. The system may comprise a plurality of machine tools. Each machine tool may comprise one or more motorised machine tool drives. Each machine tool may comprise a machine tool controller for controlling the position of the one or more motorised machine tool drives. The system may include one or more measurement probes. The machine tool probes may be mountable on a machine tool to enable on-machine measurement of an object. Each of the one or more measurement probes may comprise a measurement sensor for collecting measurement data. Each of the one or more measurement probes may comprise a radio transceiver for transmitting the collected measurement data. The system may include an industrial communications network. The industrial communications network may be interfaced to the machine tool controller of each of the machine tools. The industrial communications network may comprise a cellular radio network. The cellular radio network may comprise a plurality of cellular base stations. The base stations may be for wireless communication with the radio transceiver of each of the one or more measurement probes. The industrial communications network may comprise a cellular locating unit for calculating a cellular location of the radio transceiver of each of the one or more measurement probes. The industrial communications network may include a measurement control unit configured to use the cellular location calculated for each of the one or more measurement probes to determine which machine tool of the plurality of machine tools each measurement probe is mounted on. The measurement control unit may enable the measurement data from each measurement probe to be used with corresponding machine position data from the machine tool on which that measurement probe is mounted. Alternatively, or additionally, the measurement control unit may send probe configuration settings to each measurement probe via the industrial communications network. For example, the measurement control unit may send probe configuration settings that configure each measurement probe based on the machine tool on which the measurement probe was installed. Such probe configuration settings may define, for example, how measurement data is collected or processed (e.g., they may define filter or delay parameters) or how the measurement probe operates (e.g., how it can be turned on or off). Any one or more of the above-described features of the system may be used in combination with any of the features described elsewhere herein.

The present invention will now be described, by way of example only, with reference to the accompanying drawings in which;
Figure 1 shows a machine tool and measurement probe apparatus of the prior art,
Figure 2 shows multiple machine tools and measurement probes configured in accordance with the present invention,
Figure 3 shows an industrial communications network for implementing the present invention,
Figure 4 shows one embodiment that uses the communications architecture of figure 3, and
Figure 5 shows an alternative embodiment that uses the communications architecture of figure 3.

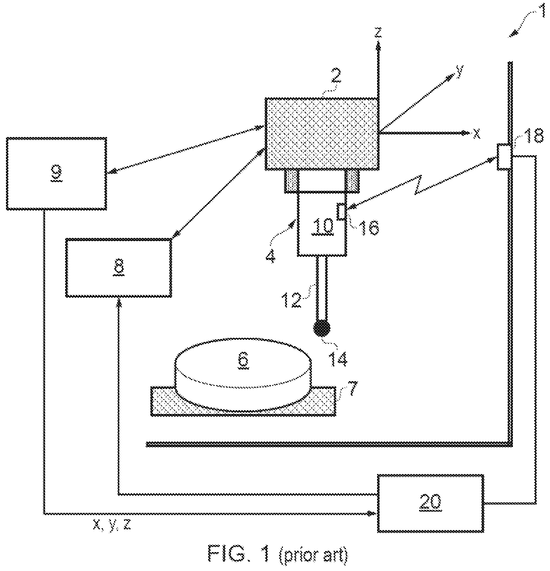

Referring to figure 1, a machine tool 1 is schematically illustrated having a spindle 2 holding a touch trigger measurement probe 4.

The machine tool 1 includes various motors 8 for moving the spindle 2 relative to a workpiece 6 located on a workpiece holder 7 within the work area of the machine tool. The location of the spindle within the work area of the machine tool 1 is accurately measured in a known manner using encoders 9; such encoder measurements provide "machine position data" in the machine coordinate system (x,y,z). A numerical controller (NC) or machine tool controller 20 of the machine tool controls (x,y,z) movement of the spindle 2 within the working volume of the machine tool and also receives information (machine position data) from the various encoders describing the spindle position. The term numerical controller as used herein should also be understood to mean any part of the numerical control system of the machine tool; e.g. it could include a programmable logic controller (PLC) and drive controllers etc. It should be noted that the terms numerical controller (NC) and machine tool controller are used interchangeable herein, unless stated otherwise. It should also be remembered that the machine tool apparatus of figure 1 is merely provided as an example and different or further axes of machine tool motion (e.g., tilting or rotary axes) could be provided.

The touch trigger measurement probe 4 comprises a probe body 10 that is attached to the spindle 2 of the machine tool using a standard releasable shank connector. The probe 4 also comprises a workpiece contacting stylus 12 that protrudes from the housing. A stylus ball 14 is provided at the distal end of the stylus 12 for contacting the associated workpiece 6. The touch trigger probe 4 generates a so-called trigger signal when deflection of the stylus exceeds a predetermined threshold. The probe 4 comprises a wireless transmitter/receiver portion 16 for passing the trigger signal to a corresponding, dedicated (paired) wireless receiver/transmitter portion of a probe interface 18. The wireless link may be, for example, RF or optical. In this example, a spread spectrum radio link as described in WO2004/057552 is provided. The machine tool controller 20 receives the machine position data (x,y,z) from the encoders 9 and, as will be described in more detail below, also has a SKIP input line for receiving a trigger signal (also termed a SKIP signal) from the probe interface 18. This SKIP input allows the machine position data (x,y,z) describing the position of the spindle in the machine coordinate system to be recorded at the instant the probe interface issues a trigger signal to the SKIP input. After appropriate calibration, this allows the position of individual points on the surface of objects, such as the workpiece 6, to be measured. For completeness, it should also be noted that the SKIP input may be given a different name on different brands of numerical controller.

As explained above, each machine tool having a measurement probe is equipped with a dedicated probe interface that is paired with that measurement probe. The pairing process ensures the measurement probe 4 communicates only with the probe interface 18 of the machine tool 1 on which it is mounted (i.e., communication with adjacent probe interfaces is prevented). However, this requires the user to successfully perform an initial "pairing" procedure each time the measurement probe is used with a different probe interface. It is therefore time-consuming to move a measurement probe from one machine tool to another and if the pairing procedure is not performed correctly it is possible for the measurement probe to continue to communicate with a probe interface of a different machine tool than the one it is mounted on. This would mean that the machine tool movement will continue even if the stylus has been deflected, thereby resulting in a machine tool crash that can seriously damage the machine tool.

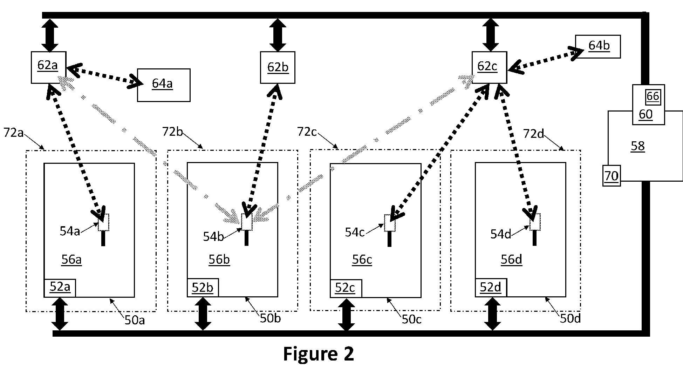

Referring to figure 2, an industrial metrology system in accordance with the present invention is schematically illustrated. In particular, four machine tools 50a-50d are shown that each include a machine tool controller 52a-52d for controlling their motion. A measurement probe 54a-54d is mounted within the machine tool enclosures 56a-56d of each of the four machine tools 50a-50d. The machine tool controllers 52a-52d are interfaced (hardwired) to a hub 58 of an industrial ethernet (e.g., Fieldbus) network by various network cables. In this manner, data can be transferred to and from the machine tool controllers 52a-52d over the industrial ethernet network.

The industrial ethernet hub 58 is also interfaced to a 5G core wireless controller 60. In this manner, an industrial communications network is provided that includes both wired and wireless (5G) network components. The 5G controller 60 is shown connected (hardwired) to three Radio Access Network (RAN) nodes or base stations 62a-62c. The (fixed) base stations 62a-62c, under the control of the 5G core, provide a cellular (wireless) industrial 5G network. Although three base station 62a-62c are shown in this example, the actual number of such base stations would be selected to ensure good wireless coverage and good location accuracy of an industrial working space, such as a factory.

The measurement probes 54a-54d each include a 5G transceiver that enables wireless (radio) communication with the cellular 5G industrial network. The 5G core (wireless) controller 60 handles the communication process with the base stations 62a-62c, in accordance with standard 5G communication protocols. In this example, a first measurement probe 54a is shown in communication with the first base station 62a. The second measurement probe 54b is in communication with the second base station 62b, whilst the third and fourth measurement probes 54c-54d are each in communication with the third base station 62c. The base station that is used to communicate with a particular measurement probe will be determined using standard 5G protocols, based on factors such as the signal strength and the resource demands on the 5G network. It should be noted that the 5G network can also be used to network with other communication devices within that factory. In other words, the illustrated cellular 5G industrial network may not be dedicated solely to communications with the measurement probe 54a-54d. For example, other 5G-enabled devices in the factory, such as mobile devices 64a and 64b, may communicate over the 5G network. An advantage of the present invention is the ability to use a 5G network that is already installed in a factory thereby reducing the expense of having to install various receivers etc.

The 5G network, in particular the 5G core controller 60, also includes a cellular locating unit 66. The cellular locating unit 66, which is typically provided as a standard part of a 5G industrial network, is configured to use communications between a mobile device (such as one of the measurement probes 54a-54d) and a plurality of the base stations 62a-62c to calculate a location of the mobile device within the area covered by the cellular 5G radio network using a triangulation and/or trilateration technique. The accuracy of the calculated location is determined by various factors, such as the number of and spacing between the base stations, but a mobile device can typically be found with an accuracy of at least a few tens of centimetres or better. The cellular locating unit 66 thus provides a macro or factory location, which is termed herein a cellular location. It is important to note that the cellular location of the measurement probe established by the cellular locating unit 66 is different to the machine position data acquired by each machine tool. The machine position data provides highly accurate (e.g., sub-micron accuracy) positional information in the local machine tool coordinate system (x,y,z) that can be used for metrology, whereas the cellular location gives a macro position that indicates approximately where a mobile device is located in a factory coordinate system.

A measurement control unit 70 is also provided on the industrial communications network. **In** this embodiment, the measurement control unit 70 is connected to the hub 58 via the industrial ethernet. The measurement control unit 70 is thus an additional component that can be added to an industrial communications network to enable operation in accordance with the present invention. Although it is described in the present embodiment as a separate unit or "plug-in box", it would of course be possible to integrate the measurement control unit 70 within the hub hardware or to provide a purely software-based implementation (e.g., that runs on general purpose hardware available within the hub).

The measurement control unit 70 is configured to route data, particularly measurement data, from each one of the measurement probes 54c-54d connected to the 5G network to the appropriate machine tool controller 52a-52d. The appropriate machine tool controller being the machine tool controller of the machine tool on which that measurement probe is mounted.

The measurement control unit 70 includes a memory that stores a table with information defining four non-overlapping zones 72a-72d. These zones 72a-72d define three-dimensional (3D) volumes within the factory where the various machine tools 50a-50d are known to be located. The zones 72a-72d are defined using the same 3D coordinate system as the cellular locating unit 66. **In** one example, a user can define each zone by placing a mobile device on the 5G network at various locations around the machine tool and obtaining a position of that mobile device from the cellular locating unit 66, thereby defining the 3D zone. Machine tools weigh many tons and are typically moved infrequently. The zones 72a-72d can thus be defined when the machine tools are first installed and only need to be updated if a machine tool is moved or machine tools are added. **In** such a case, the installation engineer moving or installing the machine tool could also update the zone information stored by the measurement control unit 70. It is also noted that the illustrated zones 72a-72d are shown as being slightly larger than the machine tool enclosures 56a-56d. This is simply for illustration purposes and the size of the zone could match the size of the enclosure (e.g., to ensure measurement probes placed next to a machine tool aren't assumed to be mounted on the machine tool) or could even be limited to a sub-region of the machine tool enclosure where the measurement probe would be expected to be located when it was being used. The size of these zones may also take into account the accuracy of the cellular location that is output by the cellular locating unit 66.

**In** use, the measurement control unit 70 establishes the cellular location of each measurement probe that is active on the 5G network via the cellular locating unit 66. This cellular location is compared to the stored zone information thereby enabling the measurement control unit 70 to establish which zone the measurement probe is located within and hence which machine tool the measurement probe is mounted on. For example, as shown in figure 2, the measurement probe 54b may communicate with each of the three base stations 62a-c so that the cellular locating unit 66 can establish a 3D cellular location L within the coverage volume of the 5G network. The measurement control unit 70 then determines if the cellular location L falls within any of the stored zones and in this example determines that the cellular location L is within the zone 72b. A radio link is then maintained between the measurement probe 54b and the base station 62b and the measurement control unit 70 routes any measurement data output by the measurement probe 54b to the machine tool controller 52b. This process of comparing cellular location to the stored zone information may be repeated as required. For example, it may be performed each time a probe is activated, at periodic intervals or whenever a certain event occurs (e.g., such as the measurement probe moving from a standby mode to an active measurement mode). This process is also repeated for each of the measurement probes. It should also be noted that there may be more measurement probes than machine tools, or more machine tools than measurement probes. For example, multiple measurement probes may be mounted on one machine tool or one measurement probe may be shared between multiple machine tools (e.g., if only occasional measurements are required).

As mentioned above, once the measurement probe has been identified as being mounted on a particular machine tool, the measurement data from that measurement probe can be routed to the appropriate machine tool controller. **In** the case of a touch trigger probe, the measurement data may include a digital data packet that indicates a trigger event (e.g., a deflection of the stylus of a contact-based touch trigger probe) has occurred. For such a touch trigger probe, the extraction of measurement information requires the position of the probe within the local machine tool working volume (i.e., the machine position data as measured by the machine tool controller) to be known at the instant the trigger event occurred. If the industrial communications network (i.e., the industrial ethernet plus the cellular network) has a sufficiently low latency and jitter, then it is possible to simply rely on the real time communication of the measurement data from the measurement probe to the machine tool controller. However, in the present embodiment the measurement data also includes a time-stamp that identifies when the trigger event occurred using a time value that is known to both the measurement probe and the machine tool controller. **In** other words, the machine tool controller and the measurement probe are both synchronised to a common or master clock of the industrial communications network. The master clock produces timings that are shared with all hardwired components on that network, such as the various machine tool controllers 52a-52d. A local clock is also provided within each measurement probe 54a-54d and these clocks are synchronised with the master clock (e.g., by the periodic exchange of timing messages). In this manner, the machine tool controller receiving such measurement data can relate the trigger event to the machine position at the time the trigger event occurred thereby providing a measurement of the position of a point on the surface of the object.

In the present example, even if the measurement data of the touch trigger probe is time-stamped (i.e., to allow metrology information to be extracted) it should still be received by the machine tool controller within a sufficiently short period of time to allow motion of the machine tool to be stopped before the stylus of the measurement probe deflects by more than an acceptable amount. The industrial communications network is thus sufficiently fast to allow the measurement data to always be passed from the measurement probe to the controller in less than 100ms. The industrial communications network of this example is thus a so-called time sensitive network (TSN), in which it can be guaranteed that time-critical messages passed over the network can be prioritised to ensure they are received within a time window of less than 100ms. It should be noted that slower response times would be acceptable, for example if slower measurement speeds were used or a non-contact measurement probe was used for the measurements.

It should be noted that information may also be passed to each measurement probe 54a-54d via the industrial communications network. This information may be from the measurement control unit 70 or the machine tool controller 52a-52d of the machine tool 50a-50d on which the measurement probe is mounted. Each measurement probe 54a-54d may receive information that includes probe configuration settings. For example, the probe configuration settings may include trigger parameters (such as trigger threshold levels or filter delays etc) that define when the measurement probe issues a trigger signal after making contact with an object. These probe configuration settings may be manually set by a user for each measurement probe. Alternatively, the measurement control unit 70 may send probe configurations to each measurement probe 54a-54d based on the determined cellular location of that measurement probe. For example, when measurement probe 54b is determined to be in zone 72b it may be sent probe configuration settings appropriate for the machine tool 50b. In this manner, measurement probes can be exchanged between machine tools even if those machine tools require such probes to adopt different probe configuration settings.

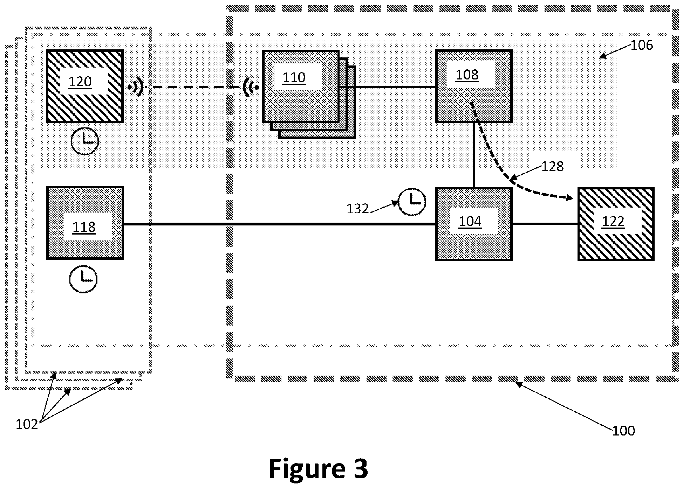

Referring to figure 3, there is illustrated an example of a communications architecture in accordance with the present invention.

In particular, figure 3 schematically show a factory network infrastructure 100 and a plurality of machine tools 102 that are located within that factory. The factory network infrastructure 100 comprises the various wired and wireless network components (hubs, switches, cables, sockets etc) that are installed in the factory and configured to provide a factory-wide (wired) industrial ethernet network 104 and a factory-wide (wireless) 5G cellular network 106. The 5G cellular network 106 is a standard configuration that comprises a 5G core 108 linked to a plurality of base stations or radio access networks (RANs) 110. The 5G cellular network 106 can also be termed a "5G bridge" because it allows mobile device to be connected to the (wired) industrial ethernet network. These wired and wireless networks together provide an industrial communications network for the factory. The factory network infrastructure 100 may thus be used to connect a wide variety of network-enabled devices within the factory to provide what is often termed a smart factory.

Figure 3 shows how the factory network infrastructure 100 can be configured to communicate with a plurality of machine tools 102. In particular, the machine tool controller 118 of each machine tool is directly hardwired into the industrial ethernet network and a measurement probe 120 mounted on each machine tool is configured to connect to the 5G network via the RAN 110. In this manner, data can be exchanged between the measurement probes 120 and the machine tool controllers 118 over the industrial communications network of the factory. The measurement probes 120 in this example are touch trigger probes, but as explained elsewhere herein it would be possible to use other types of measurement probe.

As explained above, the measurement data produced by a measurement probe needs to be matched with the corresponding machine position data that is generated by the specific machine tool on which the measurement probe is mounted. A measurement control unit 122 is thus provided to match or pair each measurement probe 120 with the machine tool on which it is mounted. In this example, the measurement control unit 122 is a unit connected (hardwired) to the industrial ethernet network 104 thereby becoming a part of the factory infrastructure.

The measurement control unit 122 includes a memory that stores information defining a plurality of zones within the factory. Each zone delimits a region (e.g., a 2D area or a 3D volume) of space within the factory. Each of the zones corresponds to the location of one of the machine tools 102 installed in the factory. The zone information may be stored in a look-up table or similar format within the memory of the measurement control unit 122. A standard function of the 5G core 108 is to establish a location (herein termed the "cellular location") of mobile devices connected to the 5G network. This is done using triangulation, trilateration or triangulateration. In short, the different path lengths and/or signal directions between the antennas of the base stations and the mobile device are used to calculate the cellular location.

In use, cellular location data 128 for each of the measurement probes 120 that are active on the 5G network is passed from the 5G core 108 to the measurement control unit 122. The measurement control unit 122 then uses the received cellular locations to determine in which zone each measurement probe is located, thereby allowing it to pair each of the measurement probes 120 with the machine tool controller of the machine tool on which it is mounted. This allocation of a measurement probe to a zone may be performed periodically, on request and/or when the measurement probe first established a link to the 5G cellular network 106. Once each measurement probe has been paired with a machine tool, the measurement control unit 122 can route the measurement data generated by each measurement probe to its paired machine tool controller 118 over the industrial ethernet network 104.

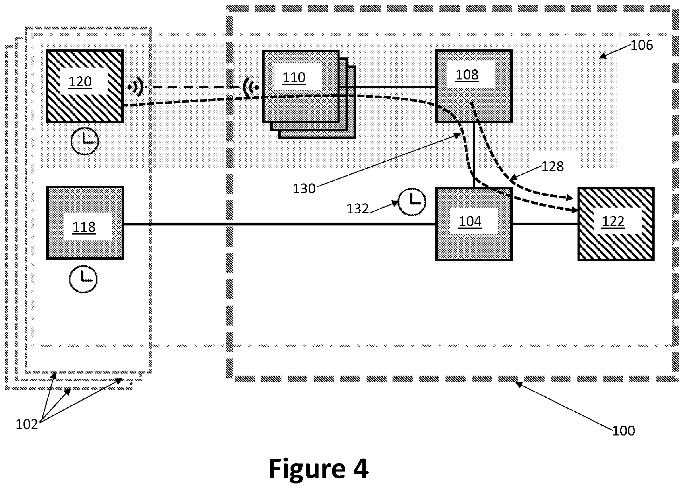

Referring to figure 4, a first example of routing measurement data through the system shown in figure 3 is illustrated. Each measurement probe 120 issues a time-stamped message (i.e., measurement data) to indicate that a trigger event has occurred. The measurement (trigger) data is passed from the measurement probe 120 to the measurement control unit 122 via the 5G cellular network 106 and the industrial ethernet network 104, as schematically indicated by the dashed line 130. The measurement control unit 122 then routes the measurement data from each measurement probe 120 to its paired machine tool controller 118 over the industrial ethernet network 104. A common clock is shared by the measurement probes 120 and the machine tool controllers 118, which in this example is derived from a master clock 132 of the industrial ethernet network 104. This allows the machine position data of the machine tool controllers 118 to be synchronised with the time-stamped measurement data generated by the measurement probes 120. This enables a machine tool controller 118 to calculate the position of a point on the surface of the object being measured on receipt of the measurement data from the measurement probe 120 mounted on that machine tool. The receipt of the measurement data (i.e., indicating a trigger event) is also used by the machine tool controller 118 as a signal to stop further motion of measurement probe 120. The machine tool controller 118 can, as per usual touch trigger measurements, use the measured position of a point on the surface of the object for subsequent cutting or measurement routines or to verify a workpiece has been cut as required etc.

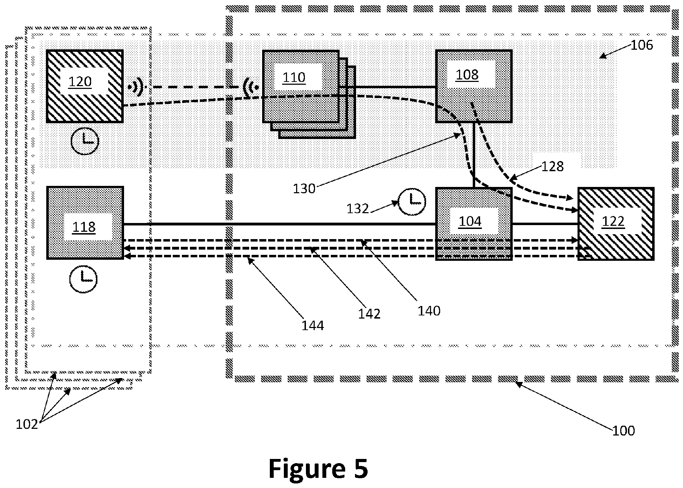

Figure 5 illustrates a second example of how measurement data can be handled using the system shown in figure 3. In this example, the time-stamped measurement (trigger) data is again passed from the measurement probe 120 to the measurement control unit 122 via the 5G cellular network 106 and the industrial ethernet network 104. The machine tool controllers 118 also periodically pass time-stamped machine position data 140 to the measurement control unit 122 using the industrial ethernet network 104. The measurement control unit 122 is configured to immediately send a motion stop signal 142 to the paired machine tool controller 118 when a trigger event is signalled (i.e., via the measurement data) by its corresponding measurement probe 120. The provision of a common clock also allows the measurement data and machine position data to be temporally aligned. The measurement control unit 122 thus uses the measurement data and the corresponding machine position data to calculate a surface position for each trigger event that occurs. This calculated surface position 144 is also passed to the corresponding (paired) machine tool controller 118, although this can be in slower time than the motion stop signal 142. The machine tool controller 118 can, as per usual touch trigger measurements, use the received measured position of a point on the surface of the object for subsequent cutting or measurement routines or to verify a workpiece has been cut as required etc.

Although a contact-based, touch trigger probe is described in the above examples it would also be possible for different types of measurement probe to be used. All the measurement probes may be of the same type (e.g., they all be touch trigger measurement probes) or they may be of different types (e.g., a mix of touch trigger probes, scanning measurement probes etc). Although the examples describe contact-based measurement probes that include a deflectable stylus, the use of non-contact probes (e.g., optical, laser-based, inductive, capacitive etc.) would also be possible. Similarly, the measurement probes may measure properties other than an object's dimensions, shape or position. For example, an ultrasound measurement probe may be used to measure object thickness or to check for the presence of defects within an object.

## Claims

1. An industrial manufacturing system, comprising;
a plurality of machine tools (50a-50d; 102), each of the plurality of machine tools including one or more motorised machine tool drives and a machine tool controller (52a-52d; 118) for controlling the position of the one or more motorised machine tool drives,
one or more measurement probes (54a-54d; 120) that are mountable on a machine tool to enable on-machine measurement of an object, each of the one or more measurement probes having a measurement sensor for collecting measurement data and a radio transceiver for transmitting the collected measurement data, and
an industrial communications network (100) interfaced to the machine tool controller of each of the plurality of machine tools,
**characterised in that** the industrial communications network comprises;
a cellular radio network comprising a plurality of cellular base stations (62a-62c; 110) for wireless communication with the radio transceiver of each of the one or more measurement probes,
a cellular locating unit (66) for calculating a cellular location (L;128) of the radio transceiver of each of the one or more measurement probes, and
a measurement control unit (70; 122) configured to use the cellular location calculated for each of the one or more measurement probes to determine which machine tool of the plurality of machine tools each measurement probe is mounted on, the measurement control unit thereby enabling the measurement data from each measurement probe to be used with corresponding machine position data from the machine tool on which that measurement probe is mounted.

2. An industrial manufacturing system according to claim 1, wherein the measurement control unit stores a machine tool location table defining a plurality of non-overlapping zones in which each of the plurality of machine tools are located, the measurement control unit determining which machine tool each measurement probe is mounted on by identifying which one of the plurality zones contains the cellular location of that measurement probe.

3. An industrial manufacturing system according to any preceding claim, comprising a plurality of measurement probes.

4. An industrial manufacturing system according to any preceding claim, wherein the measurement control unit is configured to route measurement data received from each of the one or more measurement probes to the machine tool controller of the machine tool on which the measurement probe is mounted.

5. An industrial manufacturing system according to any preceding claim, wherein the machine tool controller of each of the plurality of machine tool is configured to pass machine position data to the measurement control unit, and the measurement control unit is configured to use the machine position data and the corresponding measurement data to provide a measurement of an object.

6. An industrial manufacturing system according to any preceding claim, wherein the measurement data includes time critical measurement data for halting motion of the motorised machine tool drives of the machine tool on which the measurement probe is mounted and the industrial communications network is configured to operate as a time sensitive network (TSN) having a latency of less than 100ms.

7. An industrial manufacturing system according to any preceding claim, wherein the measurement control unit is configured to send probe configuration settings to each measurement probe via the cellular radio network, the probe configuration settings being selected based on the machine tool on which the measurement probe is determined to be mounted.

8. An industrial manufacturing system according to any preceding claim, wherein the measurement data transmitted by the radio receiver of each measurement probe includes a time-stamp.

9. An industrial manufacturing system according to any preceding claim, wherein each of the one or more measurement probes and the machine tool controller of each of the plurality of machine tools are synchronised to a common clock.

10. An industrial manufacturing system according to any preceding claim, wherein the one or more measurement probes comprise at least one touch trigger measurement probe, each touch trigger measurement probe having a measuring sensor comprising a touch trigger sensor for sensing deflection of a deflectable stylus, the measurement data collected by each touch trigger measurement probe comprising a trigger event indicating the stylus has been deflected from a rest position.

11. An industrial manufacturing system according to any preceding claim, wherein the cellular locating unit is configured to periodically calculate the cellular location of each of the one or more measurement probes.

12. A method of using one or more measurement probes (54a-54d; 120) with a plurality of machine tools (50a-50d; 102), each of the one or more measurement probes having a measurement sensor for collecting measurement data and a radio transceiver for transmitting the collected measurement data, and each of the plurality of machine tools including one or more motorised machine tool drives and a machine tool controller (52a-52d; 118) for controlling the position of the one or more motorised machine tool drives, the method comprising the steps of;
i) interfacing the machine tool controller of each of the plurality of machine tools to an industrial communications network (100) that includes a cellular radio network comprising a plurality of base stations (62a-62c; 110) that allow wireless communication with the radio transceiver of each of the one or more measurement probes,
ii) using the cellular radio network to calculate a cellular location of the radio transceiver of each of the one or more measurement probes,
iii) using the cellular location calculated for each of the one or more measurement probes to determine which machine tool of the plurality of machine tools each measurement probe is mounted on, and
iv) using the measurement data from each measurement probe with corresponding positions of the one or more motorised machine tool drives of the machine tool on which that measurement probe is mounted.

## Patentansprüche

1. Industrielles Fertigungssystem, umfassend:
eine Vielzahl von Werkzeugmaschinen (50a-50d; 102), wobei jede der Vielzahl von Werkzeugmaschinen einen oder mehrere motorisierte Werkzeugmaschinenantriebe und eine Werkzeugmaschinensteuerung (52a-52d; 118) zum Steuern der Position des einen oder der mehreren motorisierten Werkzeugmaschinenantriebe umfasst,
eine oder mehrere Messsonden (54a-54d; 120), die an einer Werkzeugmaschine montierbar sind, um eine Messung eines Objekts auf der Maschine zu ermöglichen,
wobei jede der einen oder mehreren Messsonden einen Messsensor zum Sammeln von Messdaten und einen Funksendeempfänger zum Senden der gesammelten Messdaten aufweist, und
ein industrielles Kommunikationsnetzwerk (100), das mit der Werkzeugmaschinensteuerung jeder der Vielzahl von Werkzeugmaschinen verbunden ist,
**dadurch gekennzeichnet, dass** das industrielle Kommunikationsnetzwerk umfasst:
ein zellulares Funknetzwerk, das eine Vielzahl von zellularen Basisstationen (62a-62c; 110) zur drahtlosen Kommunikation mit dem Funksendeempfänger jeder der einen oder mehreren Messsonden umfasst,
eine zellulare Ortungseinheit (66) zum Berechnen eines zellularen Orts (L; 128) des Funksendeempfängers jeder der einen oder mehreren Messsonden,
und
eine Messsteuereinheit (70; 122), die konfiguriert ist, um den für jede der einen oder mehreren Messsonden berechneten zellularen Ort zu verwenden, um zu bestimmen, auf welcher Werkzeugmaschine der Vielzahl von Werkzeugmaschinen jede Messsonde montiert ist, wobei die Messsteuereinheit dadurch ermöglicht, dass die Messdaten von jeder Messsonde mit entsprechenden Maschinenpositionsdaten von der Werkzeugmaschine, auf der diese Messsonde montiert ist, verwendet werden.

2. Industrielles Fertigungssystem nach Anspruch 1, wobei die Messsteuereinheit eine Werkzeugmaschinenortstabelle speichert, die eine Vielzahl von nicht überlappenden Zonen definiert, in denen sich jede der Vielzahl von Werkzeugmaschinen befindet, wobei die Messsteuereinheit durch Identifizieren, welche der Vielzahl von Zonen den zellularen Ort dieser Messsonde enthält, bestimmt, auf welcher Werkzeugmaschine jede Messsonde montiert ist.

3. Industrielles Fertigungssystem nach einem der vorhergehenden Ansprüche, umfassend eine Vielzahl von Messsonden.

4. Industrielles Fertigungssystem nach einem der vorhergehenden Ansprüche,
wobei die Messsteuereinheit konfiguriert ist, um Messdaten, die von jeder der einen oder mehreren Messsonden empfangen werden, an die Werkzeugmaschinensteuerung der Werkzeugmaschine, auf der die Messsonde montiert ist, zu leiten.

5. Industrielles Fertigungssystem nach einem der vorhergehenden Ansprüche,
wobei die Werkzeugmaschinensteuerung jeder der Vielzahl von Werkzeugmaschinen konfiguriert ist, um Maschinenpositionsdaten an die Messsteuereinheit weiterzuleiten, und die Messsteuereinheit konfiguriert ist, um die Maschinenpositionsdaten und die entsprechenden Messdaten zu verwenden, um eine Messung eines Objekts bereitzustellen.

6. Industrielles Fertigungssystem nach einem der vorhergehenden Ansprüche,
wobei die Messdaten zeitkritische Messdaten zum Anhalten der Bewegung der motorisierten Werkzeugmaschinenantriebe der Werkzeugmaschine, auf der die Messsonde montiert ist, umfassen und das industrielle Kommunikationsnetzwerk konfiguriert ist, um als ein zeitempfindliches Netzwerk (TSN) mit einer Latenz von weniger als 100 ms zu arbeiten.

7. Industrielles Fertigungssystem nach einem der vorhergehenden Ansprüche,
wobei die Messsteuereinheit konfiguriert ist, um Sondenkonfigurationseinstellungen über das zellulare Funknetzwerk an jede Messsonde zu senden, wobei die Sondenkonfigurationseinstellungen basierend auf der Werkzeugmaschine, an der bestimmt wird, dass die Messsonde montiert ist, ausgewählt werden.

8. Industrielles Fertigungssystem nach einem der vorhergehenden Ansprüche,
wobei die Messdaten, die durch den Funkempfänger jeder Messsonde gesendet werden, einen Zeitstempel umfassen.

9. Industrielles Fertigungssystem nach einem der vorhergehenden Ansprüche,
wobei jede der einen oder mehreren Messsonden und die Werkzeugmaschinensteuerung jeder der Vielzahl von Werkzeugmaschinen mit einer gemeinsamen Uhr synchronisiert sind.

10. Industrielles Fertigungssystem nach einem der vorhergehenden Ansprüche,
wobei die eine oder mehreren Messsonden mindestens eine Berührungsauslöser-Messsonde umfassen, wobei jede Berührungsauslöser-Messsonde einen Messsensor aufweist, der einen Berührungsauslösersensor zum Erfassen einer Ablenkung eines ablenkbaren Stifts umfasst, wobei die von jeder Berührungsauslöser-Messsonde gesammelten Messdaten ein Auslöserereignis umfassen, das anzeigt, dass der Stift aus einer Ruheposition abgelenkt wurde.

11. Industrielles Fertigungssystem nach einem der vorhergehenden Ansprüche,
wobei die zellulare Ortungseinheit konfiguriert ist, um den zellularen Ort jeder der einen oder mehreren Messsonden periodisch zu berechnen.

12. Verfahren zum Verwenden einer oder mehrerer Messsonden (54a-54d; 120) mit einer Vielzahl von Werkzeugmaschinen (50a-50d; 102), wobei jede der einen oder mehreren Messsonden einen Messsensor zum Sammeln von Messdaten und einen Funksendeempfänger zum Senden der gesammelten Messdaten aufweist, und jede der Vielzahl von Werkzeugmaschinen einen oder mehrere motorisierte Werkzeugmaschinenantriebe und eine Werkzeugmaschinensteuerung (52a-52d; 118) zum Steuern der Position des einen oder der mehreren motorisierten Werkzeugmaschinenantriebe umfasst, wobei das Verfahren die folgenden Schritte umfasst:
i) Verbinden der Werkzeugmaschinensteuerung jeder der Vielzahl von Werkzeugmaschinen mit einem industriellen Kommunikationsnetzwerk (100), das ein zellulares Funknetzwerk umfasst, das eine Vielzahl von Basisstationen (62a-62c; 110) umfasst, die eine drahtlose Kommunikation mit dem Funksendeempfänger jeder der einen oder mehreren Messsonden ermöglichen,
ii) Verwenden des zellularen Funknetzwerks, um einen zellularen Ort des Funksendeempfängers jeder der einen oder mehreren Messsonden zu berechnen,
iii) Verwenden des für jede der einen oder mehreren Messsonden berechneten zellularen Orts, um zu bestimmen, auf welcher Werkzeugmaschine der Vielzahl von Werkzeugmaschinen jede Messsonde montiert ist, und
iv) Verwenden der Messdaten von jeder Messsonde mit entsprechenden Positionen des einen oder der mehreren motorisierten Werkzeugmaschinenantriebe der Werkzeugmaschine, auf der diese Messsonde montiert ist.

## Revendications

1. Un système de fabrication industrielle, comprenant :
une pluralité de machines-outils (50a-50d, 102), chacune de la pluralité de machines-outils comprenant un ou plusieurs entraînements de machines-outils motorisés et un automate de machines-outils (52a-52d ; 118) pour contrôler la position du ou des entraînements de machines-outils motorisés,
un ou plusieurs palpeurs de mesure (54a-54d ; 120) qui peuvent être montés sur une machine-outil pour permettre la mesure sur machine d'un objet, chacun des palpeurs de mesure ayant un capteur de mesure pour collecter des données de mesure et un émetteur-récepteur radio pour transmettre les données de mesure collectées, et
un réseau de communication industriel (100) interfacé à l'automate de machine-outil de chacune de la pluralité de machines-outils,
**caractérisé en ce que** le réseau de communication industriel comprend :
un réseau radio cellulaire comprenant une pluralité de stations de base cellulaires (62a-62c ; 110) pour une communication sans fil avec l'émetteur-récepteur radio de chacun du ou des palpeurs de mesure,
une unité de localisation cellulaire (66) pour calculer une localisation cellulaire (L ; 128) de l'émetteur-récepteur radio de chacun du ou des palpeurs de mesure, et
une unité de commande de mesure (70 ; 122) configurée pour utiliser l'emplacement cellulaire calculé pour chacun du ou des palpeurs de mesure pour déterminer sur quelle machine-outil de la pluralité de machines-outils chaque palpeur de mesure est monté, l'unité de commande de mesure permettant ainsi aux données de mesure de chaque palpeur de mesure d'être utilisées avec les données de position de machine correspondantes de la machine-outil sur laquelle ce palpeur de mesure est monté.

2. Un système de fabrication industrielle selon la revendication 1, dans lequel l'unité de commande de mesure stocke une table d'emplacement de machine-outil définissant une pluralité de zones sans chevauchement dans lesquelles chacune de la pluralité de machines-outils est située, l'unité de commande de mesure déterminant sur quelle machine-outil chaque palpeur de mesure est monté en identifiant laquelle de la pluralité de zones contient l'emplacement cellulaire de ce palpeur de mesure.

3. Un système de fabrication industrielle selon l'une quelconque des revendications précédentes, comprenant une pluralité de palpeurs de mesure.

4. Un système de fabrication industrielle selon l'une quelconque des revendications précédentes, dans lequel l'unité de commande de mesure est configurée pour acheminer les données de mesure reçues de chacun du ou des palpeurs de mesure vers l'automate de machine-outil de la machine-outil sur laquelle le palpeur de mesure est monté.

5. Un système de fabrication industrielle selon l'une quelconque des revendications précédentes, dans lequel l'automate de machine-outil de chacune de la pluralité de machines-outils est configuré pour transmettre des données de position de machine à l'unité de commande de mesure, et l'unité de commande de mesure est configurée pour utiliser les données de position de machine et les données de mesure correspondantes pour fournir une mesure d'un objet.

6. Un système de fabrication industrielle selon l'une quelconque des revendications précédentes, dans lequel les données de mesure comprennent des données de mesure en temps réel pour arrêter le mouvement des entraînements de machine-outil motorisés de la machine-outil sur laquelle le palpeur de mesure est monté et le réseau de communication industriel est configuré pour fonctionner comme un réseau sensible au temps (TSN) ayant une latence inférieure à 100 ms.

7. Un système de fabrication industrielle selon l'une quelconque des revendications précédentes, dans lequel l'unité de commande de mesure est configurée pour envoyer des réglages de configuration de palpeur à chaque palpeur de mesure via le réseau radio cellulaire, les réglages de configuration de palpeur étant sélectionnés en fonction de la machine-outil sur laquelle le palpeur de mesure est déterminé comme étant monté.

8. Un système de fabrication industrielle selon l'une quelconque des revendications précédentes, dans lequel les données de mesure transmises par le récepteur radio de chaque palpeur de mesure comprennent un horodatage.

9. Un système de fabrication industrielle selon l'une quelconque des revendications précédentes, dans lequel chacun du ou des palpeurs de mesure et l'automate de machine-outil de chacune de la pluralité de machines-outils sont synchronisés sur une station d'accueil commune.

10. Un système de fabrication industrielle selon l'une quelconque des revendications précédentes, dans lequel le ou les palpeurs de mesure comprennent au moins un palpeur de mesure à déclenchement par contact, chaque palpeur de mesure à déclenchement par contact ayant un capteur de mesure comprenant un capteur à déclenchement par contact pour détecter le fléchissement d'un stylet pouvant être fléchi, les données de mesure collectées par chaque palpeur de mesure à déclenchement par contact comprenant un événement de déclenchement indiquant que le stylet a été fléchi depuis une position de repos.

11. Un système de fabrication industrielle selon l'une quelconque des revendications précédentes, dans lequel l'unité de localisation cellulaire est configurée pour calculer périodiquement l'emplacement cellulaire de chacun du ou des palpeurs de mesure.

12. Un procédé d'utilisation d'un ou plusieurs palpeurs de mesure (54a-54d ; 120) avec une pluralité de machines-outils (50a-50d ; 102), chacun du ou des palpeurs de mesure ayant un capteur de mesure pour collecter des données de mesure et un émetteur-récepteur radio pour transmettre les données de mesure collectées, et chacune de la pluralité de machines-outils comprenant un ou plusieurs entraînements de machine-outil motorisés et un automate de machine-outil (52a-52d ; 118) pour contrôler la position du ou des entraînements de machine-outil motorisés, le procédé comprenant les étapes consistant à :
i) interfacer l'automate de machine-outil de chacune de la pluralité de machines-outils avec un réseau de communication industriel (100) qui comprend un réseau radio cellulaire comprenant une pluralité de stations de base (62a-62c, 110) qui permettent une communication sans fil avec l'émetteur-récepteur radio de chacun du ou des palpeurs de mesure,
ii) utiliser le réseau radio cellulaire pour calculer une localisation cellulaire de l'émetteur-récepteur radio de chacun du ou des palpeurs de mesure,
iii) utiliser l'emplacement cellulaire calculé pour chacun du ou des palpeurs de mesure pour déterminer sur quelle machine-outil de la pluralité de machines-outils chaque palpeur de mesure est monté, et
iv) utiliser les données de mesure de chaque palpeur de mesure avec les positions correspondantes du ou des entraînements de machine-outil motorisés de la machine-outil sur laquelle ce palpeur de mesure est monté.
